# EUROPEAN PATENT APPLICATION

(11) **EP 3 974 791 A1**
(43) Date of publication of application: **30.03.2022**
(21) Application number: 20198929.0
(22) Date of filing: 29.09.2020
(51) Int. Cl.: G01H 1/00, G01C 9/00

(54) **METHOD FOR ALIGNING MULTIAXIAL SENSOR ON AN APPARATUS**

(71) Applicant: Sulzer Management AG, 8401 Winterthur (CH)
(72) Inventor: Eggertson, Edward Curran, 8307 Effretikon (CH); Wattinger, Thomas, 5408 Ennetbaden (CH)
(74) Representative: IPS Irsch AG

(57) **Abstract**

Method for aligning a multiaxial sensor (100) on an apparatus (1, 10) comprising providing the apparatus (1, 10) comprising a shaft (3, 30) rotatable about an axial axis (A) of an apparatus coordinate system (H,V,A) whose first axis (H) is perpendicular to the axial axis (A) and perpendicular to a second axis (V), which second axis (V) is perpendicular to the axial axis (A); providing the analysis device (200) with an intermediate coordinate system (q,r,s), the intermediate coordinate system (q,r,s) comprising a first intermediate axis (q), a second intermediate axis (r) perpendicular to the first intermediate axis (q) and a third intermediate axis (s) perpendicular to the first intermediate axis (q) and the second intermediate (r) axis; wherein the multiaxial sensor (100) with a sensor coordinate system (x,y,z) is attached to the apparatus (1, 10), and the sensor coordinate system (x,y,z) comprises a first sensor axis (x), a second axis (y) and a third sensor axis (z); characterized in that the analysis device (200) is aligned and arranged with the first intermediate axis (q) under a predetermined orientation with respect to the axial axis (A), wherein both a second angular relationship (e) between the apparatus coordinate system (H,V,A) and the intermediate coordinate system (q,r,s) is determined, and a third angular relationship (f) between the intermediate coordinate system (q,r,s) and the sensor coordinate system (x,y,z) is determined via the analysis device (200), wherein a first angular relationship (d) between the sensor coordinate system (x,y,z) and the apparatus coordinate system (H,V,A) is determined from the second angular relationship (e) and the third angular relationship (f); and the first angular relationship (d) is stored in a control unit (500) of the apparatus (1, 10) for evaluation of values determined by the multiaxial sensor (100) in an operating state of the apparatus (1, 10).

## Description

The invention relates to a method for aligning a multiaxial sensor on an apparatus in accordance with the preamble of the independent claim of the respective category.

The significance of vibration on an apparatus with a rotating shaft is immense, especially for pumps. There are two simultaneous intents for measuring vibration. First, specific vibration signatures or increases in vibration can be indicators of component degradation or undesired changes in the process parameters. Second, a monitor system limits the amount of vibration that can be experienced by the machine to avoid failure, e.g. from component fatigue. These intents are often conflated.

Vibration is often used as an indicator of when the pump is being operated away from its best efficiency point (BEP) and energy is lost.

Changes of a vibration of the pump can be used (for example by comparing a current vibration of the pump with a vibration amplitude limit) to control the pump such that the vibration is reduced and an unstable operating state of the pump is avoided.

The vibration of a pump can be recorded to be used as a diagnostic tool. One important aspect of the vibration is thereby the direction. Typically, a structural vibration is measured independently in the three orthogonal directions / axes of the pump: Horizontal, Vertical and Axial (H-V-A). This is in particular defined in vibration standards for pumps. This definition is specifically intended for horizontal pumps (shaft axis perpendicular to gravity). For vertical pumps (shaft axis parallel to gravity), the coordinate system is often defined as X-Y-A, as the X and Y axes are both horizontal axes. For simplicity, the remainder of the description will assume a horizontal pump.

To facilitate the capturing of all three directions of the vibration simultaneously, a multiaxial sensor such as a triaxial sensor can be employed, which preferably includes independent transducers in the three principal axes of a sensor (x-y-z). To facilitate a mapping of the sensor's vibration channels to an apparatus coordinate system, it is easiest if the x-y-z coordinates are perfectly aligned to the H-V-A coordinates. However, depending on the mounting technique (e.g. mounted magnetic, with an epoxy resin, threaded, etc.), alignment can be almost impossible, or require adapters that negatively affect the performance of the sensor.

For ease of installation, permanence, manufacturing and signal quality, an industrial triaxial sensor (i.e. those intended for applications on rotating equipment) usually includes an external thread integrated into a sensor housing. However, this can make it difficult to achieve a perfect alignment. If the borehole on the pump is not parallel to one of the H-V-A axes, a perfect alignment is impossible. Even if it is, the triaxial sensor must be rotated until it is at a specified torque. At that torque, the alignment of the two secondary axes (those not parallel to the borehole) will have an unpredictable alignment. This final angle at full torque is impossible to predefine and difficult to compensate with mechanical adapters.

The vibration measured in sensor coordinates can be easily transformed into the apparatus coordinate system if the angular relationship (three degrees of freedom) between the coordinate systems is defined.

In the state of the art defining these angles consists of measuring them manually with devices such as a protractor and/or ruler and using geometrical/trigonometric relationships. This introduces significant user and measurement error and is nearly impossible to perform if the borehole is not parallel to one of the pump axes.

Manually measuring the angles directly between the sensor and the pump can be difficult, even in the best-case where one of the sensor axes is still parallel to one of the pump axes (only a single angle must be measured).

Alignment with an integrated thread mount can also be achieved through physical means, either by using thin spacers (a fraction of the thread pitch) or a compressible spring-like adapter. Both of these decrease the mounted resonant frequency of the sensor (thereby decreasing its effective frequency range) and increase the thermal resistance between pump and sensor (thereby leading to a distorted temperature measurement, which is a standard feature in the sensors that would exhibit this technology).

Some triaxial sensors avoid this problem altogether by using different mounting methods - epoxy or magnets - which allow the sensor to be physically aligned. These mounting methods are temporary, difficult to apply and / or decrease the performance (i.e. frequency range) of the sensor.

Starting from this prior art, it is therefore an objective of the invention to propose a method for aligning a multiaxial sensor on an apparatus which avoids the disadvantages of the state of the art, in particular a method which uses the most preferred simple mounting method (for simplicity, permanence and performance), yet eliminates most user error arising from the physical or digital alignment of the sensor.

The subjects of the invention satisfying this object are characterized by the features of the independent claim.

Thus, according to the invention, a method for aligning a multiaxial sensor on an apparatus is proposed. The method comprises providing the apparatus with a shaft rotatable about an axial axis of an apparatus coordinate system (of the apparatus) whose first axis is perpendicular to the axial axis and perpendicular to a second axis, which second axis is perpendicular to the axial axis. Furthermore, the analysis device with an intermediate coordinate system is provided. The intermediate coordinate system comprises a first intermediate axis (which is preferably parallel to gravity), a second intermediate axis perpendicular to the first intermediate axis and a third intermediate axis perpendicular to the first intermediate axis and the second intermediate axis. The multiaxial sensor with a sensor coordinate system is attached to the apparatus, and the sensor coordinate system comprises a first sensor axis, a second axis and a third sensor axis. According to the invention, the analysis device is aligned and arranged with the first intermediate axis under a predetermined orientation with respect to the axial axis, wherein both a second angular relationship between the apparatus coordinate system and the intermediate coordinate system is determined, and a third angular relationship between the intermediate coordinate system and the sensor coordinate system is determined via the analysis device, wherein a first angular relationship between the sensor coordinate system and the apparatus coordinate system is determined from the second angular relationship and the third angular relationship. The first angular relationship is stored in a control unit of the apparatus for evaluation of values determined by the multiaxial sensor in an operating state of the apparatus.

In the context of the invention, "aligning the multiaxial sensor on the apparatus" means that a resulting signal of an axes of the apparatus is a weighted combination of the raw signals of the sensor coordinates system. The sensor is not arranged on the pump such that the apparatus axes are parallel / levelled to the sensor axes.

The method according to the invention is preferably a digital method for aligning the multiaxial sensor on the apparatus. The apparatus can be a pump, comprising a pump shaft rotatable about the axial axis or an electric motor, comprising a motor shaft rotatable about the axis.

The apparatus can comprise a Cartesian coordinate system as apparatus coordinate system. For a horizontal pump the first axis is perpendicular to the axial axis and perpendicular to gravity. The second axis is parallel to gravity, which by nature of the horizontal pump, must also be perpendicular to the other two axes. In vertical pumps, first axis and second axis are both perpendicular to gravity and therefore the axial axis parallel to gravity. They are perpendicular to each other, and the alignment of first axis is often defined as being parallel to an inlet or an outlet nozzle of the pump.

The first sensor axis is preferably parallel to a borehole (normal to a machine surface of the apparatus) and is usually called the primary axis. The other two sensor axes are usually called secondary axes. When the multiaxial sensor (in the scope of the application also in general referred to as "sensor") is thread-mounted, a final direction of the first sensor axis is predefined and doesn't change during the threading. The direction of the second and third sensor axes will change as the sensor is torqued. The secondary axes usually have lower performance than the primary axis.

In a simplified version of the method according to the invention one of the intermediate axes is set to be parallel to gravity (later referred to as "two photo method" or "one-photo method"). However, no specific manual alignment of the intermediate axes is required.

The angular relationships can be determined by defining degrees of freedom (preferably three degrees of freedom). Therefore, the first angular relationship can be determined by defining the degrees of freedom between the apparatus coordinate system and the sensor coordinate system. The second angular relationship can be determined by defining the degrees of freedom between the apparatus coordinate system and the intermediate coordinate system. The third angular relationship can be determined by defining the degrees of freedom between the intermediate coordinate system and the sensor coordinate system. Thereby the degrees of freedom are preferably determined as angular degrees of freedom by defining angles. In particular, by defining the angles, especially all angles, between the apparatus coordinate system and the sensor coordinate system and / or between the apparatus coordinate system and the intermediate coordinate system and / or between the intermediate coordinate system and the sensor coordinate system (More precisely, the angles between the different axis of the coordinate systems are determined).

The multiaxial sensor is preferably a sensor with multi-axis components (most preferably designed as a multiaxial accelerometer, in particular a triaxial accelerometer) being mounted to the pump or electric motor which have the apparatus coordinate system as an inherent coordinate system.

Accelerometers measure acceleration and can thereby measure mechanical vibrations of a system. The multiaxial accelerometer measures vibration in two or three planes of motion. The sensor is preferably the multiaxial accelerometer, in particular the triaxial accelerometer, which can be used in the method according to the invention for simultaneous measurement of acceleration / vibration in three (preferably) perpendicular axes / directions. A preferred example for the multiaxial accelerometer is a MEMS accelerometer (i.e. a micro electromechanical system manufactured using microelectronic fabrication techniques thereby receiving mechanical sensing structures of microscopic size). MEMS accelerometers can measure DC acceleration signals and thus measure gravity (i.e. act as an inclinometer). Aligning piezoelectric triaxial accelerometers is also possible, but not with methods that require an inclinometer in the sensor, as they cannot measure DC acceleration.

The multiaxial accelerometer or more precisely the triaxial accelerometer can comprise a first transducer aligned along the first sensor axis, a second transducer aligned along the second sensor axis, and a third transducer aligned along the third sensor axis, each of which generate their own independent acceleration signal. Here it is preferred if all transducers (i.e. at least first, second and third) are arranged perpendicular to each other. This configuration is also preferred when using a different multiaxial sensor. The multiaxial accelerometer can therefore include independent transducers in the three principal directions of the sensor. The transducers can be integrated into a single sensor-housing.

If the multiaxial accelerometer (i.e. as the sensor) is used in the method according to the invention, this means that the multiaxial accelerometer can measure gravity. Using the triaxial accelerometer in the method according to the invention, means that the accelerometer's angle to gravity can be determined automatically and therefore the accelerometer can function as a first inclinometer. The accelerometer can therefore determine an alignment of the sensor coordinate system with respect to gravity from an acceleration measurement, and the first angular relationship can be determined based on the alignment of the sensor coordinate system with respect to gravity and the alignment of the first sensor direction with respect to the axial axis. This can be used to (double)check the first angular relationship determined via the analysis device.

However, the sensor can be any sensor / device with its own (sensor) coordinate system due to multiaxis sensors / actuators (such as the inclinometer, a magnetic field sensor, etc.). In the method according to invention the sensor can be mounted to the apparatus, in particular directly to the apparatus, especially a casing / housing of the apparatus. The sensor can be mounted by a magnetic connection, an adhesive (such as epoxy) connection, a threaded connection, a screw, a bolt, a through-bolt etc.). Most preferably the sensor is mounted by a stud (for example a double-sided stud) and or a quick-connect clip. The stud can be designed as an integral stud. The sensor can therefore comprise a male thread which is directly engaged in the method according to the invention with a threaded borehole on the apparatus in particular on the housing or casing of the apparatus.

For the alignment of the analysis device with the apparatus coordinate system different embodiments of the method according to the invention can be used. The analysis device can comprise a second inclinometer, wherein the second angular relationship is determined by aligning the analysis device with the apparatus coordinate system and measuring an apparatus inclination angle. Due to the second inclinometer the first intermediate direction can be set to be parallel to gravity.

In accordance with a preferred embodiment of the method according to the invention, the sensor can comprise a marker for determining the third angular relationship between the intermediate coordinate system and the sensor coordinate system. The orientation of the marker from the perspective of the analysis device defines the angular relationship.

As a preferred measure the analysis device can comprise a second triaxial accelerometer. The second triaxial accelerometer can be used as the second inclinometer to determine the second angular relationship between the analysis device and the pump.

In an advantageous embodiment of the method according to the invention, the second angular relationship is determined by aligning the analysis device with the apparatus coordinate system. For this purpose, the analysis device may include parts that enable the alignment to the apparatus coordinate system. Therefore, the analysis device may comprise an alignment means, which allows the parallel orientation to the pump. The alignment means could be a special edge of the analysis device. The orientation / alignment can be made on parts of the housing which are parallel to the shaft such as bearing housing fins. In addition, the alignment means can comprise bubble levels, which indicate the alignment to gravity (i.e. to the vertical) and to the horizontal, can be used for alignment in the method according to the invention. The bubble levels are preferably correlated to the second inclinometer. However, bubble levels are or alignment means are not necessary for the method according to the invention.

Furthermore, the analysis device can comprise a camera (i.e. an optical sensor), with which the second angular relationship can be determined (to determine the first angular relationship) by an optical measurement. The camera is preferably a digital camera with a display, wherein the alignment means is shown on the display and the camera is aligned with the apparatus coordinate system by means of the alignment means. The marker can be designed as a geometric pattern on the outside of the sensor, which is interpreted by the camera. The pattern is preferably designed as a two-dimensional binary bitmap code, in particular a QR code (which is preferably aligned to the sensor coordinate system). The marker can in particular be any geometric pattern which is aligned with the sensor coordinate system.

A device including many of the above-mentioned preferred measures is a smartphone including the digital camera and the second multiaxial accelerometer. Furthermore, it is easy to provide the smartphone with an application for implementation of the method according to the invention. Alternatively, the analysis device with the camera, the display and the second inclinometer can be used.

In the following, the advantages of the invention are discussed in more detail using the smartphone as an example. However, this can also be based on the analysis device with the camera, the display and the second inclinometer. Therefore, in this embodiment of the method according to the invention the smartphone acts as the analysis device with intermediate coordinate system.

If the angular relationship can be defined for both intermediate coordinate system to apparatus coordinate system (second angular relationship) and intermediate coordinate system to sensor coordinate system (third angular relationship), then it stands that the transformation from apparatus coordinate system to sensor coordinate system (first angular relationship) is also fully defined.

The second angular relationship can in particular be defined using one or multiple of the following solutions:
The second inclinometer of the smartphone can be used (if the pump is or by assuming the third pump direction is truly vertical).
The difference of the second inclinometer between smartphone at a point A (resting on pump, such that the intermediate coordinate system is aligned to the apparatus coordinate system) and point B (e.g. when the smartphone is handheld), which is useful when the apparatus is not mounted flat, (an inertial sensor or integrations of a gyroscope from point A to point B can also be used).
A visual alignment of a photo of the apparatus and the camera (e.g. alignment of a grid overlay with one of the apparatus axes, wherein the axial axis is preferred).

The intermediate coordinate system can in particular be related to the sensor coordinate system (third angular relationship) using one or multiple of the following solutions:
A photo can be taken of the sensor, which has the QR code aligned to the sensor coordinate system / with information to the sensor coordinate system. The QR code (or a similar geometric pattern) is transformed to be parallel to the camera's frame to be decoded. This yields the desired angles and therefore the third angular relationship can be determined.
A visual alignment of a photo of the sensor and the camera can be used (e.g. alignment of a grid overlay with one of the sensor directions).
The second inclinometer of the camera can be compared to the first inclinometer of the sensor.
A second magnetic field sensor of the smartphone can be compared to a first magnetic field sensors of the sensor.

If there are three unknowns between the sensor coordinate system and the apparatus coordinate system, all degrees of freedom in the other angular relationships must be defined. If there are fewer unknowns between the sensor coordinate system and the apparatus coordinate system (e.g. due to first inclinometer), then the other angular relationships are allowed to have some unknowns, in particular as long as orthogonality of the unknowns of separate coordinate systems is considered.

The apparatus coordinate system, the sensor coordinate system and the intermediate coordinate system can be Cartesian coordinate systems. This can particularly be the case for all implementations of the invention.

The method according to the invention with the camera can be conducted as the two-photo method. The sensor is mounted on the top of the apparatus. Therefore, the vertical apparatus axis and the third sensor axis are parallel (and parallel to gravity). The camera is positioned over the sensor. Bubble levels appear on a screen of the camera as a first alignment means, these force the user to hold the camera (mainly) horizontal. The camera's accelerometer is used as the second inclinometer for the bubble levels.

Lines can be displayed on the display as second alignment means, which can be overlaid (for example on an image). The user rotates the camera until the overlay is parallel with the shaft (axial apparatus axis; For this purpose, the alignment can be made on parts of the apparatus housing which are parallel to the axial apparatus axis such as bearing housing fins of the pump; hereby the first intermediate axis is aligned under a predetermined orientation with respect to the axial apparatus axis). There could also be tags in the overlay to indicate which direction should be DE/NDE (Drive End / Non Drive End) in order to maintain polarity. The user takes a photo. The user then aligns the photo with the sensor. The same lines can be used as the overlay, or the overlay can change to a top-view of the sensor or just the sensor coordinate system printed on the top of the sensor. The phone must still be level (Bubble levels to hold the camera mainly horizontal and orthogonal to gravity). Maintaining polarity is possible with the right overlay.

The sensor should preferably be near the center of the image, but an error from having the sensor offset in the image can also to be determined experimentally. The user then takes another photo. The two photos will essentially be the same, besides an angle offset between them. A simple angular cross-correlation algorithm can be applied to the images to determine the angle offset (in other words an inclination angle) of the sensor. Thus, the first angular relationship can be determined.

In accordance with another preferred embodiment, the QR code is attached to the top of the sensor and is aligned with the sensor coordinate system. The method according to the invention can be carried out with a single photo. A processor of the analysis device / smartphone can locate the three distinctive squares at the corners of the QR code image. The relative geometric positions of the three corner squares in the image are used to define the angular relationship. Typical algorithms used to decode QR codes include a normalization of the image to compensate for a non-trivial angular relationship between the camera and the QR code. The angles of this normalization can be used directly to determine the third angular relationship, or the angles can be determined otherwise.

Technically, only a few corner points are required for performing the normalization transformation. However, the QR code can even include encoded data such as a sensor serial number, size of the QR code, link to the analysis/commissioning software, and possibly other metadata.

In an advantageous embodiment of the method with the single photo (the one-photo method), the sensor is top-mounted on the pump. The camera is also bubble-leveled as described before and overlay-aligned as described before. As long as care is taken with the overlay alignment, then user error for the entire method is minimized. The angular offset (in the plane of the photo) of the QR code is determined and is used as the angle offset between pump and sensor coordinates. Slight deviations from pure vertical can then be considered with the second inclinometer.

QR codes are scannable at any relative orientation between camera and sensor, as long as the code is visible for the camera. Practically however, the plane of the QR code and the plane of the camera should be ideally about 45 degrees angled to each other (∢zs∼45°). At much higher angles, the camera will have trouble resolving the QR code. At much lower angles, two of the normalization angles are very imprecise and the error of the method increases. This means the three angular degrees of freedom between the sensor and camera always comprises zero unknowns due to the QR normalization. This is in particular true if the sensor is positioned in the middle of the frame of the camera. Therefore, the sensor can be positioned in any orientation to the apparatus, when the camera is levelled (or inclination measured), and overlay aligned as described before. The camera's orientation to the pump is therefore fully known.

Likewise, the inclinometer (accelerometer) of the sensor can be used to define unknowns between the apparatus and the sensor. If the inclinometer of both the sensor and the camera (no overlay alignment) is used, only two unknowns remain, which would normally be solvable. However, those unknowns are parallel to each other (both about the apparatus vertical axis) and the system is therefore not solvable. The information from the overlay alignment is therefore always required.

It has proven to be advantageous in practice if the analysis device comprises the camera configured to capture images / photos and an orientation sensor (such as the second multiaxial accelerometer) configured to provide orientation information for the analysis device; one or more processors; and memory storing program instructions executable by the one or more processors to obtain an image captured by the camera. The orientation information from the orientation sensor can be associated with the image, wherein the orientation information is from the time of capture of the image. Pixel data of the image can be analyzed to determine the offset angle of the images (in particular a rotational offset) to obtain the first angular relationship.

Furthermore, the analysis device can comprise the second inclinometer (for example accelerometer) or a gyro sensor which provides an indication of the direction of gravity with respect to the device position (for example for the bubble levels).

The pump is preferably designed as a single phase and/or single stage pump. Further advantageous measures and embodiments of the invention result from the dependent claims.

The invention will be explained in more detail in the following both in an apparatus respect and in a process engineering aspect with reference to embodiments and to the drawings. There are shown in the drawing:
- Fig. 1a:: a perspective illustration of an embodiment of a pump for a method according to the invention wherein the cover is removed and is only symbolically indicated; and
- Fig. 1b:: a schematic illustration of a pump and an electric motor for a method according to the invention;
- Fig. 2a:: a schematic representation for illustrating a sensor coordinate system for a sensor, an intermediate coordinate system for an analysis device and an apparatus coordinate system for an apparatus; and
- Fig. 2b:: a schematic representation of a first angular relationship between a sensor coordinate system and an apparatus coordinate system, a second angular relationship between an intermediate coordinate system and an apparatus coordinate system and third angular relationship between a sensor coordinate system and an intermediate coordinate system; and
- Fig, 3:: a most common misalignment of an apparatus and a sensor, and
- Fig. 4:: a first schematic representation of a method according to the invention, and
- Fig. 5:: a second schematic representation of a method according to the invention, and
- Fig. 6:: a third schematic representation of a method according to the invention.

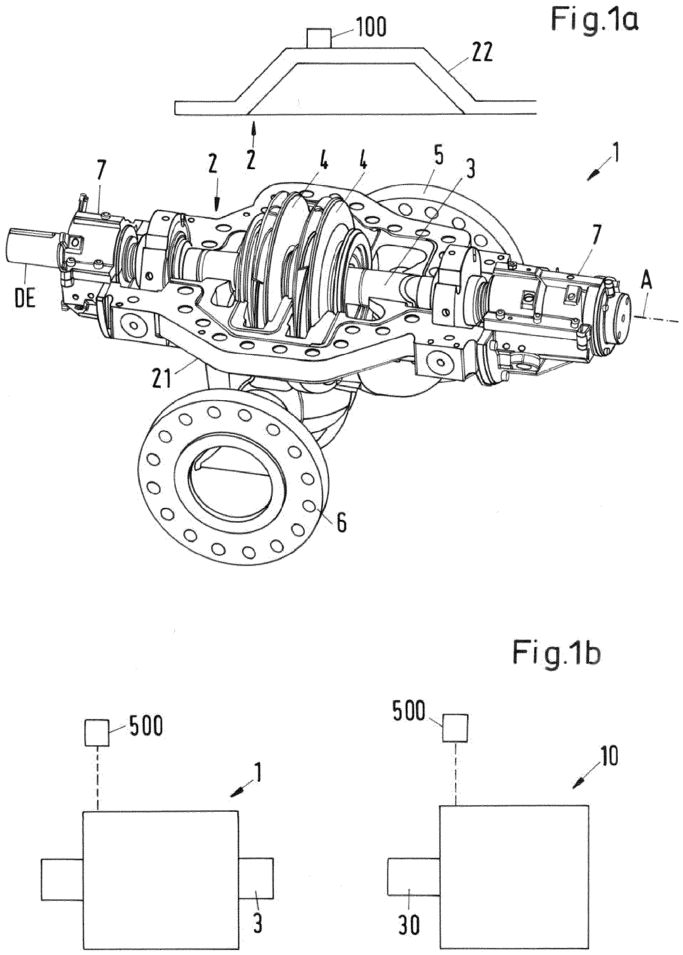

Fig. 1a in a perspective illustration shows an embodiment of an axially split pump for a method according to the invention which is referred to in totality by means of the reference numeral 1. The pump 1 comprises a housing 2 that is axially split and that has a bottom part 21 as well as a cover 22. For a better understanding the cover 22 is removed in Fig. 1 and is only symbolically indicated.

In the following a preferred embodiment of pump 1 as an apparatus for the method according to the invention is described. Reference is made by way of example to a configuration. Of course, the process according to the invention is not limited to a pump. However, a typical application is for pumps of type OH1, OH2, BB1, BB2, BB3 and OH3. It goes without saying that the invention is not restricted to pumps. The apparatus may also be an electric motor or another apparatus with a rotating shaft.

The housing 2 comprises an inlet 5 for sucking in a fluid to be conveyed, as well as an outlet 6 for the fluid. The pump 1 further comprises a rotatable shaft 3 whose longitudinal direction determines an axial axis A. At least one impeller 4 is rotatably fixedly mounted at the shaft 3, in the present case two impellers 4 are mounted which convey the fluid from the inlet 5 to the outlet 6. Furthermore, a respective bearing apparatus 7 is provided at both ends with respect to the axial axis A of the pump 1 in order to support the shaft 3 of the pump 1. The left bearing apparatus 7 in accordance with the illustration is provided on a drive end DE that can be connected to a non-illustrated drive which displaces the shaft 3 of the pump 1 into rotation.

The term axially split pump 1 and/or axially split housing 2 is meant as generally used such that the housing 2 is divided in parallel with the longitudinal direction of the shaft 3, this thus means in a plane which includes the longitudinal axis of the shaft 3. A multiaxial sensor 100 with a sensor coordinate system (not shown) is mounted to the cover 22 of the axially split housing 2 of the pump 1 with an apparatus coordinate system (not shown) and is top-mounted. A QR method according to the invention works regardless of where the sensor is mounted. Top-mounting is preferred but not required.

For the method according to the invention an analysis device, with an intermediate coordinate system is provided (not shown). A second angular relationship between the apparatus coordinate system and the intermediate coordinate system, and a third angular relationship between the intermediate coordinate system and the sensor coordinate system are determined via the analysis device. The second angular relationship is determined by aligning the analysis device with the apparatus coordinate system. Furthermore, the sensor 100 comprises a marker (not shown). Data about the sensor coordinate system is read out by the analysis device from the marker and the third angular relationship between the sensor coordinate system and the intermediate coordinate system is determined on the basis of the data from the marker.

A first angular relationship between the sensor coordinate system and the apparatus coordinate system is then determined from the second angular relationship and the third angular relationship.

The pump 1 is multi-stage centrifugal pump - in this example a two-stage centrifugal pump, that is of single flow design and is in a so-called between-bearing-arrangement, this means the impellers 4 are present between the bearing apparatuses 7.

A direction perpendicular to the axial axis A is referred to as 'radial direction'. The term 'axial' or 'axially' is used with the common meaning 'in axial direction' or 'with respect to the axial direction'. In an analogous manner the term 'radial' or 'radially' is used with the common meaning 'in radial direction' or 'with respect to the radial direction'.

It is understood that the invention is not limited to such apparatus types, but rather is also suitable for other pumps, for example single stage pumps, this means such pumps having only one impeller 4, dual-flow pumps having a single stage or multi-stage design or different pump types in comparison to centrifugal pumps and is therefore also suitable for all pumps and apparatus on which a multiaxial sensor 100 can be used or deployed. The invention is in particular suitable for the installation of a multiaxial accelerometer 100 on the housing (here 2) of the pump 1.

Fig. 1b shows a schematic illustration of the pump 1 with pump shaft 3 and an electric motor 10 with a motor shaft 30 for the method according to the invention. For the method according to the invention the multiaxial sensor (not shown) can be mounted to the pump 1 or the electric motor 10 and the first angular relationship can be stored in a control unit 500 of the pump 1 or the electric motor 10 for evaluation of values determined by the multiaxial sensor in an operating state.

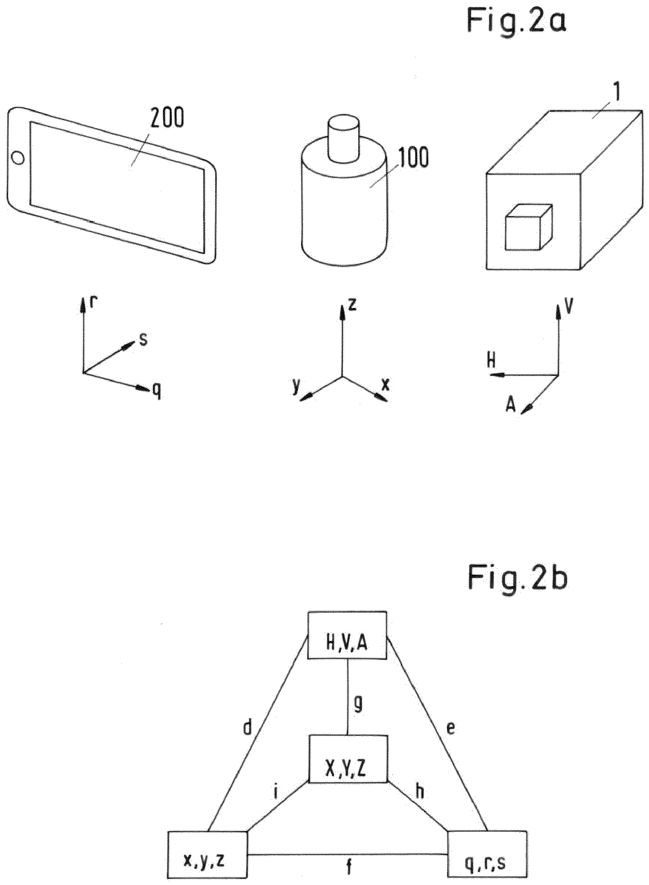

Fig. 2a shows a schematic representation for illustrating the sensor coordinate system x,y,z for the sensor 100, the intermediate coordinate system q,r,s for the analysis device 200 and the apparatus coordinate system H,V,A for the pump 1 (or another apparatus).

The apparatus coordinate system H,V,A for a horizontal pump comprises the pump axial axis A, a first radial axis H which is perpendicular to the pump axial axis A and perpendicular to a second radial axis V, and the second axis V which is perpendicular to the axial axis A and parallel to gravity.

The sensor coordinate system x,y,z comprises the first sensor axis x, the second sensor axis y and the third sensor axis z, where the third sensor axis passes orthogonally through the mating surface between the apparatus and the sensor.

The intermediate coordinate system q,r,s comprises the first intermediate axis q and the second intermediate axis r and the third intermediate axis s (which can be parallel to a focal axis of the camera), both of which are perpendicular to the first intermediate axis q and to each other.

The coordinate systems are Cartesian coordinate systems and the coordinate systems of the three systems are defined relative to the typical system geometry. The apparatus coordinate system H,V,A is preferably aligned with a global coordinate system for most cases. Therefore, the first axis H is an apparatus horizontal direction H perpendicular to gravity and the second axis V is an apparatus vertical direction V parallel to gravity.

Fig. 2b shows a schematic representation of the first angular relationship d between the sensor coordinate system x,y,z and the apparatus coordinate system H,V,A, the second angular relationship e between the intermediate coordinate system q,r,s and the apparatus coordinate system H,V,A and the third angular relationship between the sensor coordinate system x,y,z and the intermediate coordinate system q,r,s.

Each angular relationship has three angular degrees of freedom and therefore a maximum of three unknowns. The number of unknowns of each angular relationship is represented respectively as d, e, f. The method according to the invention achieves d=0 by setting e=0 and f=0.

All systems are solvable and all angular relationships can be defined when d+e+f≤3, as long as the unknowns are not parallel. When [d,e,f]=[3,0,0], it is clear the unknowns are orthogonal (not parallel). When [d,e,f]=[1,1,0], but the unknowns are parallel, then the system of equations is dependent, i.e. does not have a single solution, and full defining the first angular relationship (d=0) is not achievable.

However, there are four coordinate systems to be considered. The global coordinate system is the one that is defined by gravity, where Z is parallel to gravity. 99% of pumps are either horizontal (V parallel to Z) or vertical (A parallel to Z). g must be 0 for any method to work. This is easiest to define with purely vertical or horizontal apparatuses.

The relationship schematic can be thought of as a tetrahedron with four vertices (coordinate systems), six edges (angular relationships between coordinate systems) and 4 faces/triangles. Each triangle is a system of equations that can be solved when the conditions are met (sum of the unknowns in the edges is less than three and those unknowns are not parallel).

The method according to the invention with a QR code first looks at triangle e-g-h. With an overlay and a second inclinometer, this is then solvable with [e,g,h]=[2,0,1]. The unknown from h is not parallel to either unknown from e as long as s is not perpendicular to Z. The closer s is to being parallel to Z, the higher is the accuracy of this method.

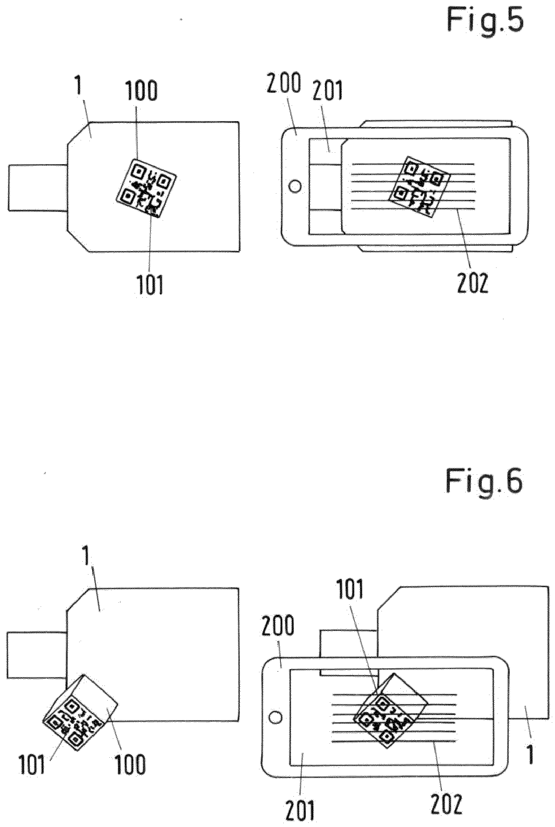

Next, triangle f-h-i is solved. From the previous step, [f,h,i]=[3,0,3]. By using a QR normalization outputs (as will be shwon later in Fig. 6), f=0 and the triangle is solvable. Once i is defined, the angles can be compared to a first inclinometer angles as a check, as the first inclinometer overdefines the system.

Finally, [d,g,i]=[3,0,0] and can be solved regardless of whether any information is known a priori about the sensor orientation to the pump (e.g. top mounted).

Alternatively to solving the f-h-i and d-g-i triangles, the d-e-f can be solved directly once f=0, and the check against a first inclinometer can take place afterwards. This can then be repeated at different camera angles by the user. The results from each photo can be compared to calculate a value for error and/or increase the accuracy of the method.

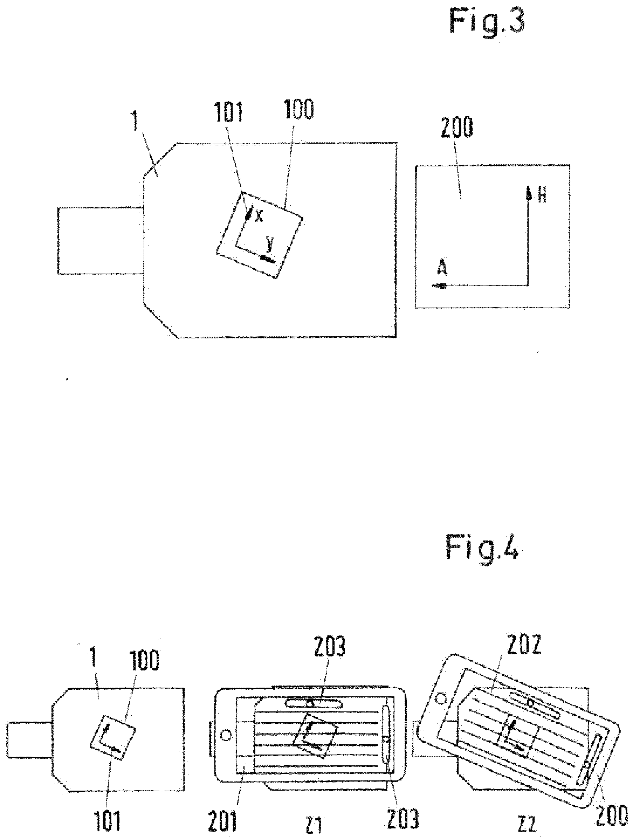

Fig. 3 shows the most common misalignment, where the sensor 100 is mounted vertically on the pump 1, i.e. the third sensor axis is parallel to the vertical pump direction. The second angular relationship is determined by aligning the analysis device 200 with the pump 1. Furthermore, the sensor 100 can comprise the marker (not shown), which is read out by the analysis device 200 to determine the third angular relationship.

Fig. 4 shows a first schematic representation of a method according to the invention, wherein in Fig. 5 and 6 further schematic representations of the method according to the invention are shown.

In the methods according to Fig. 4-6 the analysis device 200 is designed as smartphone 200 comprising a camera with display 201, first alignment means 202 as lines on the display 201 and with a second inclinometer whose orientation is represented by bubble levels 203 (second alignment means).

The method of Fig. 4 with the camera is conducted as a two-photo method. The sensor 100 is mounted on the top of the pump 1. Therefore, the vertical pump direction and the third sensor axis are parallel (and parallel to gravity). The smartphone 200 with the camera is positioned over the sensor 100 in step Z1. The bubble levels 203 appear on the display 201 as the first alignment means, that force the user to hold the smartphone 200 (mainly) horizontal. A second accelerometer integrated in the smartphone 200 is used as the second inclinometer for the bubble levels 203.

Furthermore, lines 202 are be displayed on the display as the second alignment means, which lines 202 are overlaid with the axial axis A in step Z1 and with the marker 101 in step Z2. Therefore, the user rotates the smartphone 200 until the lines 202 are parallel with the shaft (i.e. axial axis, the alignment is made on parts of the pump housing which are parallel to the pump axis). The user takes a photo, which is the end of step Z1. The user then aligns the photo with the marker 101 of the sensor 100. The same lines 202 are used as an overlay. The smartphone 200 must still be level (bubble levels 203 to hold the camera mainly horizontal and orthogonal to gravity). The user then takes another photo. The two photos will essentially be the same, besides an angle offset between them. A simple angular cross-correlation algorithm is applied to the images to determine the angle offset of the sensor and therefore the first angular relationship is determined.

The method of Fig. 5 with the camera is conducted as a one-photo method, which is similar to the method according to Fig. 4.

The QR code 101 is attached to the top of the sensor 100 and is aligned with the sensor coordinate system. The smartphone 200 is levelled and axially aligned with the lines 202 and bubble levels (which are not shown).

A processor integrated in smartphone locates three distinctive squares at the corners of the QR code image 101, using a smaller square (or multiple squares) near the fourth corner to normalize the image for size, orientation, and angle of viewing.

Though the output angles of this normalization transformation are available from the QR code 101, which is then used to identify the angle offset between the sensor 100 and the smartphone 200. Different methods can then be used to fix the smartphone 200 to the pump 1, and therefore calculate the sensor's 100 angle to the pump 1.

Even though the camera / smartphone is pictured as horizontal in the figures the camera / smartphone is able to be at any angle to the apparatus for the method according to the invention.

The method of Fig. 6 with the camera is conducted as a one-photo method, which is similar to the method according to Fig. 5.

The QR code 101 is scannable at any relative orientation between smartphone 200 and the sensor 100, as long as the code 101 is visible for the smartphone 200. This means the three angular degrees of freedom between the sensor 100 and smartphone 200 always comprises zero unknowns due to the QR normalization.

Starting the method shown in Fig. 6 the sensor 100 can have any orientation to the pump 1 - yielding in d=3. The QR code 101 on the sensor 100 and the camera 200 on set f=0. The inclinometer of the camera sets e=1, and additionally, the overlay aligned to H/V/A sets e=0. Therefore, the first angular relationship can be determined.

## Claims

1. Method for aligning a multiaxial sensor (100) on an apparatus (1, 10) comprising:
providing the apparatus (1, 10) comprising a shaft (3, 30) rotatable about an axial axis (A) of an apparatus coordinate system (H,V,A) whose first axis (H) is perpendicular to the axial axis (A) and perpendicular to a second axis (V), which second axis (V) is perpendicular to the axial axis (A);
providing the analysis device (200) with an intermediate coordinate system (q,r,s), the intermediate coordinate system (q,r,s) comprising a first intermediate axis (q), a second intermediate axis (r) perpendicular to the first intermediate axis (q) and a third intermediate axis (s) perpendicular to the first intermediate axis (q) and the second intermediate (r) axis;
wherein the multiaxial sensor (100) with a sensor coordinate system (x,y,z) is attached to the apparatus (1, 10), and the sensor coordinate system (x,y,z) comprises a first sensor axis (x), a second axis (y) and a third sensor axis (z);
**characterized in that**
the analysis device (200) is aligned and arranged with the first intermediate axis (q) under a predetermined orientation with respect to the axial axis (A), wherein both a second angular relationship (e) between the apparatus coordinate system (H,V,A) and the intermediate coordinate system (q,r,s) is determined, and a third angular relationship (f) between the intermediate coordinate system (q,r,s) and the sensor coordinate system (x,y,z) is determined via the analysis device (200), wherein a first angular relationship (d) between the sensor coordinate system (x,y,z) and the apparatus coordinate system (H,V,A) is determined from the second angular relationship (e) and the third angular relationship (f);
and the first angular relationship (d) is stored in a control unit (500) of the apparatus (1, 10) for evaluation of values determined by the multiaxial sensor (100) in an operating state of the apparatus (1, 10).

2. Method according to claim 1, wherein the apparatus (1, 10) is a pump (1), comprising a pump shaft (3) rotatable about the axial axis (A).

3. Method according to claim 1, wherein the apparatus (1, 10) is an electric motor (10), comprising a motor shaft (30) rotatable about the axial axis (A).

4. Method according to one of the proceeding claims, wherein the second angular relationship (e) is determined by at least partly aligning the analysis device (200) with the apparatus coordinate system (H,V,A).

5. Method according to one of the proceeding claims, wherein the sensor (100) comprises a marker (101) for determining the third angular relationship (f) between the intermediate coordinate system (q,r,s) and the sensor coordinate system (x,y,z), and data about the sensor coordinate system (x,y,z) is provided by the marker (101) for the analysis device (200) and/or is read out by the analysis device (200) from the marker (101), wherein the third angular relationship (f) between the sensor coordinate system (x,y,z) and the intermediate coordinate system (q,r,s) is determined on the basis of the data from the marker (101).

6. Method according to one of the proceeding claims, wherein the analysis device (200) comprises a second inclinometer and the second angular relationship (e) is determined by aligning the analysis device (200) with the apparatus coordinate system (H,V,A) and measuring an apparatus inclination angle.

7. Method according to one of the proceeding claims, wherein the multiaxial sensor (100) is a triaxial sensor (100), in particular a triaxial accelerometer (100).

8. Method according to claim 7, wherein the triaxial sensor (100) comprises a first transducer aligned along the first sensor axis (x), a second transducer aligned along the second sensor axis (y), and a third transducer aligned along the third sensor axis (z).

9. Method according to claim 6, wherein the second inclinometer is a second multiaxial accelerometer.

10. Method according to one of the proceeding claims, wherein the first intermediate axis (q) is perpendicular to the second intermediate axis (r) and the third intermediate axis (s) and the second intermediate axis (r) is perpendicular to the third intermediate axis (s).

11. Method according to one of the proceeding claims, wherein the analysis device (200) comprises a camera and the second angular relationship (e) and / or the third angular relationship (f) is determined by an optical measurement with the camera.

12. Method according to claim 11, wherein the camera (200) is a digital camera (200) with a display (201), wherein an alignment means (202) is shown on the display (201) and the camera (200) is aligned with the apparatus coordinate system (H,V,A) by means of the alignment means (202).

13. Method according to claim 11 or 12, wherein the marker (101) is designed as a geometric pattern (101) on an outside of the multiaxial sensor (100) and the angular relationship is determined by the visual distortion of the pattern as perceived by the camera (200).

14. Method according to claim 13, wherein the geometric pattern (101) is designed as a two-dimensional code (101), in particular a QR code (101).

15. Method according to one of the proceeding claims, wherein the multiaxial sensor (100) is a first inclinometer and an alignment of the sensor coordinate system (x,y,z) with respect to gravity is determined from an acceleration measurement of the inclinometer and the determined first angular relationship (d) is checked using the alignment of the sensor coordinate system (x,y,z) with respect to gravity.
